**Europäisches Patentamt**

**European Patent Office**

**Office européen des brevets**

(11) Numéro de publication : **0 397 572 B1**

(12)

# FASCICULE DE BREVET EUROPEEN

(45) Date de publication du fascicule du brevet :
**22.09.93 Bulletin 93/38**

(51) Int. Cl.$^5$ : **F42B 3/113**, G02B 7/02

(21) Numéro de dépôt : **90401244.0**

(22) Date de dépôt : **10.05.90**

(54) Dispositif d'amorçage photopyrotechnique comportant une microlentille sertie par un matériau à mémoire de forme et chaîne pyrotechnique utilisant ce dispositif.

(30) Priorité : **12.05.89 FR 8906286**

(43) Date de publication de la demande :
**14.11.90 Bulletin 90/46**

(45) Mention de la délivrance du brevet :
**22.09.93 Bulletin 93/38**

(84) Etats contractants désignés :
**AT BE CH DE DK ES GB IT LI NL SE**

(56) Documents cités :
**EP-A- 0 292 383**
**FR-A- 2 311 952**
**FR-A- 2 353 069**
**FR-A- 2 509 037**

(56) Documents cités :
**FR-A- 2 580 822**
**FR-A- 2 596 530**
**US-A- 3 724 383**
**US-A- 3 812 783**

(73) Titulaire : **AEROSPATIALE Société Nationale Industrielle**
**37, Boulevard de Montmorency**
**F-75781 Paris Cédex 16 (FR)**

(72) Inventeur : **Josse, Alain Paul**
**35 rue Gabriel**
**F-33160 Saint Medard en Jalles (FR)**

(74) Mandataire : **Mongrédien, André et al**
**c/o SOCIETE DE PROTECTION DES INVENTIONS 25, rue de Ponthieu**
**F-75008 Paris (FR)**

## Description

La présente invention a pour objet un dispositif d'amorçage photopyrotechnique miniature étanche et hermétique entrant dans la constitution d'une chaîne fonctionnelle pyrotechnique initialisée par un faisceau lumineux énergétique fourni par une source laser.

Ce type de chaîne pyrotechnique a été principalement développée pour des applications balistiques impliquant des problèmes de volume et de masse liés au nombre de fonctions pyrotechniques à réaliser.

Le dispositif d'amorçage pyrotechnique de l'invention est susceptible de remplacer et d'optimiser, dans tous les cas, les composants pyrotechniques classiques utilisés à ce jour pour toutes les applications pyrotechniques notamment haute énergie.

Une chaîne fonctionnelle photopyrotechnique, utilisant l'énergie lumineuse issue d'une source laser comme stimulus d'initiation des substances pyrotechniques, embarquable sur des engins balistiques, se compose de trois éléments principaux une "centrale laser", un cable optique pour transporter l'énergie lumineuse et un composant photopyrotechnique du type amorce-détonateur ou inflammateur connecté au cable optique. La "centrale laser" comprend essentiellement une source laser, des commutateurs optiques et une logique de commande. La source laser peut fonctionner en mode déclenché ou en mode relaxé.

Par "câble optique", il faut comprendre aussi bien une fibre optique qu'un faisceau de fibres optiques.

Par substances pyrotechniques, on entend les explosifs primaires tels que les azotures, les fulminates, les tétrazènes, etc., les explosifs secondaires (tels que PETN, RDX, HNS, etc.) et les compositions pyrotechniques telles que les compositions d'allumage, éclairantes, traçantes, fumigènes, etc.

Le qualificatif "haute énergie" impose l'emploi exclusif d'explosifs secondaires ou de compositions pyrotechniques dont les seuils de sensibilité aux différents tests de sécurité sont égaux ou inférieurs à ceux de l'hexogène.

Une amorce détonateur photopyrotechnique est un dispositif chargé d'explosifs primaire et/ou secondaire qui peuvent être initiés sous l'action d'un faisceau laser et permettent d'obtenir une onde de choc suffisante pour initier un autre composant pyrotechnique chargé d'explosif secondaire ; le régime de fonctionnement d'une amorce détonateur est la détonation. Quant aux inflammateurs pyrotechniques, ce sont des dispositifs contenant une substance pyrotechnique capable de s'enflammer lorsqu'elle reçoit un apport calorifique suffisant, par exemple sous forme d'un faisceau laser, cette flamme pouvant entraîner la mise à feu d'une autre composition pyrotechnique ; le régime de fonctionnement d'un inflammateur est la combustion ou la déflagration.

Le dispositif pyrotechnique de l'invention constitue aussi bien une amorce détonateur qu'un inflammateur pyrotechnique.

La plupart des dispositifs d'amorçage photopyrotechnique actuellement connue présente une mauvaise étanchéité et/ou herméticité vis-à-vis de l'extérieur, ce qui a deux inconvénients. Tout d'abord, la substance pyrotechnique d'amorçage est mal protégée des influences extérieures (humidité ou atmosphère plus ou moins corrosive), ce qui peut nuire à son fonctionnement. Par ailleurs, lors de la mise à feu de la charge pyrotechnique, on risque d'avoir des pertes de rendement dues à des fuites de gaz dégagé par la charge pyrotechnique lors de la détonation ainsi que des risques de pollution des équipements environnants et en particulier de la "centrale laser".

On a envisagé tout récemment dans le document FR-A-2 615 609, un dispositif d'amorçage photopyrotechnique comportant un corps creux destiné à recevoir une charge pyrotechnique initiée par un faisceau laser dont la focalisation est assurée à l'aide d'une optique en saphir tronconique logée dans le corps du dispositif ; le montage de cette optique associé à un joint d'étanchéité assure en outre la protection de la charge pyrotechnique contre les agressions extérieures. La constitution de cette optique, lui permet par ailleurs de résister aux effets mécaniques engendrés lors du fonctionnement de la charge, évitant ainsi d'éventuelles fuites de gaz à travers le passage ménagé pour le faisceau laser.

Ce dispositif bien que résolvant un certain nombre de problèmes relatifs aux dispositifs antérieurs, présente encore un encombrement trop important en vue de son utilisation sur des engins balistiques. En particulier, l'optique tronconique est associée à une ou deux autres lentilles disposées à une distance relativement importante de cette optique et présente des diamètres relativement grands. En outre, l'étanchéité et/ou l'herméticité de ce dispositif sont encore insuffisantes.

Aussi, l'invention a pour objet un dispositif d'amorçage photopyrotechnique miniature présentant une étanchéité et/ou une herméticité améliorées par rapport à celles des dispositifs photopyrotechniques de l'art antérieur.

Il est connu par ailleurs par le document FR-A-2 311 952 d'assurer le maintien d'une lentille dans un corps creux à l'aide d'une gaine en plastique thermorétractable. Une telle gaine thermorétractable ne peut nullement être utilisée dans le domaine pyrotechnique. En effet, il y a une incompatibilité chimique de la gaine plastique avec les produits explosifs (la migration intermoléculaire peut introduire une "flegmatisation" de l'explosif qui peut amener un non fonctionnement de détonation, déflagration). Dans le domaine pyrotechnique, une substance flegmatisante est une substance qui diminue la sensibilité de l'explosif aux chocs et aux frictions.

De plus, l'épaisseur d'une gaine thermorétractable est très fine et pose un problème de reprise de tenue mécanique sur le corps, un problème d'étanchéité et d'herméticité qui n'est pas assuré (irrégularité cylindrique de la gaine, vieillissement du plastique en ambiances particulières d'utilisation, la gaine peut glisser avec les vibrations).

Enfin, la mise en place d'une gaine thermorétractable nécessite une mise en température à 125°C.

De façon plus précise, l'invention telle que décrite dans la revendication 1, a pour objet un dispositif d'amorçage photopyrotechnique miniature comportant un corps creux fermé à une extrémité et destiné à recevoir une substance pyrotechnique, une optique rigide de focalisation logée dans le corps servant à focaliser un faisceau lumineux énergétique de longueur d'onde donnée sur la substance pyrotechnique, caractérisé en ce que l'optique de focalisation est une microlentille à gradient d'indice ou une microlentille sphérique ayant un indice constant dans tout le volume, insérée dans une ferrule en un métal ou alliage métallique à mémoire de forme, montée à l'entrée du corps creux et assurant une fixation étanche et hermétique de la microlentille à l'intérieur du corps.

D'autres réalisations selon l'invention sont décrites dans les revendications 2-13. Un procédé de fabrication de l'objet de l'invention est décrit dans la revendication 14.

L'utilisation d'une microlentille, c'est-à-dire d'une lentille de petites tailles, pour la focalisation du faisceau lumineux sur la substance pyrotechnique, conduit à une réduction importante de l'encombrement du dispositif photopyrotechnique, aussi bien en diamètre qu'en longueur. Cette microlentille sera appelée ultérieurement microlentille principale.

Pour assurer la fixation de la microlentille principale dans le corps du dispositif, on aurait pu envisager le collage. Toutefois, cette technologie de collage engendre un certain nombre d'inconvénients tels que l'incompatibilité des colles utilisées avec les substances pyrotechniques, pouvant conduire à des pertes de performance du dispositif, une étanchéité et/ou herméticité insuffisantes des liaisons mécaniques entre la microlentille et le corps du dispositif ainsi qu'un vieillissement prématuré des colles.

Aussi, pour assurer un blocage parfait de la microlentille principale dans le corps du dispositif avec une étanchéité et/ou une herméticité suffisantes ainsi qu'une conservation des caractéristiques optiques et mécaniques en température et dans le temps, on a envisagé le sertissage de cette microlentille par une ferrule en métal ou alliage à mémoire de forme, noté ci-après A.M.F.

En particulier, la ferrule en A.M.F. présente un diamètre interne, à température ambiante, inférieur au diamètre externe de la microlentille.

Ce blocage de la microlentille principale assure au moins une étanchéité et/ou herméticité respectivement caractérisées par un débit de fuite inférieur à $10^{-5}$ et $10^{-6}$cm$^3$ d'hélium par seconde sous une différence de pression amont-aval de $10^5$ Pascal pendant 2 minutes. En effet, l'utilisation d'un matériau à mémoire de forme permet d'épouser la forme de la microlentille.

Les microlentilles utilisables dans l'invention sont des microlentilles à gradient d'indice, c'est-à-dire des lentilles dont l'indice de réfraction décroît radialement du centre de la lentille vers le bord, ou des billes de verre dont l'indice est constant dans tout le volume.

De préférence, on utilise des microlentilles à gradient d'indice ayant la forme d'un cylindre à base circulaire ; leur longueur varie de 3 à 15 mm et leur diamètre est inférieur à 3 mm et en particulier égal à 1, 1,8 ou 2 mm. Il est toutefois possible d'utiliser des microlentilles tronconiques.

Afin d'assurer un sertissage satisfaisant maintenant en particulier la conservation des caractéristiques optiques initiales de la microlentille principale avant sertissage, le rapport du diamètre D de la microlentille sur le diamètre interne d de la ferrule, à température ambiante, est tel que $1,005 \leqq D/d < 1,020$.

Par ailleurs, il est souhaitable que l'épaisseur de la ferrule soit de l'ordre de 0,9 mm. En effet, pour une épaisseur supérieure à 0,9 mm, on obtient des fissures, voire des cassures dans la microlentille et pour une épaisseur inférieure à 0,9 mm, l'étanchéité et/ou l'herméticité ne sont pas tout à fait satisfaisantes bien que supérieures à celle des dispositifs de l'art aitérieur. Il semblerait qu'un effet de masse intervienne sur le serrage de la microlentille.

Il est connu d'utiliser des pièces métalliques à mémoire de forme pour le centrage et/ou le couplage de fibres optiques dans des connecteurs. Voir à ce sujet, les documents US-A-4 743 084 et US-A-4 352 542. Toutefois, personne, jusqu'à ce jour, n'a envisagé le sertissage de microlentilles par une ferrule en métal ou alliage métallique à mémoire de forme assurant une étanchéité et/ou une herméticité dans le domaine pyrotechnique.

Ce sertissage par une ferrule en A.M.F. de la microlentille principale assure un maintien mécanique parfait, avant et après le fonctionnement du dispositif pyrotechnique, évitant ainsi toute fuite éventuelle de gaz résultant de l'explosion en direction de la source laser utilisée pour initier la charge. En outre, le sertissage de la microlentille principale conformément à l'invention n'introduit aucune déformation et aucune atténuation du faisceau lumineux initiateur de la charge lors de son passage à travers la microlentille après sertissage.

Un A.M.F. est un matériau dont la forme peut être modifiée par application d'une contrainte à basse température, la forme initiale pouvant alors être retrouvée par simple chauffage. Ce phénomène est l'une des propriétés thermomécaniques étonnantes associée à une transformation structurale réversible du type martensitique thermo-élastique ; la phase martensitique est la structure cristallographique du métal ou alliage à basse température. La phase mère ou haute température correspond à une structure austénitique.

L'effet mémoire de forme peut être simple ou réversible. Il est simple lorsqu'un abaissement seul de la température du matériau sous forme initiale ne permet pas le retour à la forme réalisée par contrainte à froid.

L'effet mémoire est réversible lorsque, après un traitement convenable dit "d'éducation" du matériau, il est possible de revenir par simple abaissement de la température à la forme réalisée par contrainte. Le passage un grand nombre de fois entre les formes austénitique et martensitique, dépendant uniquement de la température, est ce qu'on appelle l'effet de mémoire réversible.

Dans l'invention, on utilise avantageusement un matériau métallique à mémoire de forme simple, l'ensemble ferrule-microlentille devant être indémontable.

Comme matériau métallique à mémoire de forme connu, utilisable dans l'invention, on peut citer les alliages à base de fer (tels que Fe-C, Fe-Cr, Fe-Ni), des alliages cuivreux ou de métaux nobles (tels que Cu-Zn, Cu-Sn, Cu-Al, Cu-Zn-Al, Cu-Zn-Al-Ni, Cu-Al-Ni, Ag-Cd, Au-Cd), des alliages à base de titane et/ou de nickel (tels que Ni-Ti, Ni-Ti-Fe, Ni-Al) ou encore certains métaux purs (Co, Ti, Na). Le choix du matériau et les pourcentages relatifs des différents constituants dépendent de la nature de la transformation, et en particulier de la température de transition de la phase martensitique à la phase austénitique, du domaine de température relatif à l'application et de l'effet mémoire (simple ou réversible) recherché.

En particulier, on utilise les alliages de Cu-Zn-Al du fait de leur faible hystérésis de transformation, de leur facilité de mise en oeuvre et de leur coût relativement bas, leur tenue en température entre -110 et +120°C étant tout à fait satisfaisante pour l'application envisagée.

Généralement, le faisceau lumineux entrant dans le dispositif photopyrotechnique est divergent. Aussi, afin d'améliorer la focalisation de ce faisceau sur la substance pyrotechnique sortant de la microlentille principale et donc d'accroître l'efficacité de l'initiation photopyrotechnique, on monte en amont de cette microlentille principale une microlentille auxiliaire rendant parallèle le faisceau lumineux issu de la source laser via le câble optique.

Cette microlentille auxiliaire est cylindrique ou sphérique. Son diamètre est aussi inférieur à 3 mm et sa longueur (pour une lentille cylindrique) est choisie dans l'intervalle allant de 2 à 10 mm. Son indice peut être constant dans tout le volume ou décroissant du centre à la périphérie.

Afin de renforcer l'étanchéité et/ou l'herméticité du dispositif photopyrotechnique avant mise à feu, on utilise avantageusement un corps creux monobloc, contrairement aux dispositifs de l'art antérieur.

Le dispositif d'amorçage défini précédemment est destiné à entrer dans la constitution d'une chaîne fonctionnelle photopyrotechnique "haute énergie" embarquable. Ainsi, l'invention a encore pour objet une telle chaîne photopyrotechnique telle que décrite dans la revendication 13.

D'autres caractéristiques et avantages de l'invention ressortiront mieux de la description qui va suivre, donnée à titre illustratif, et non limitatif, en référence aux dessins annexés, dans lesquels :

- la figure 1 est un schéma de principe illustrant une chaîne photopyrotechnique conforme à l'invention ;
- la figure 2 est une vue schématique en coupe d'un mode de réalisation du dispositif d'amorçage photopyrotechnique conforme à l'invention ;
- la figure 3 illustre schématiquement le processus de montage de la microlentille principale dans la ferrule en matériau à mémoire de forme, conformément à l'invention ;
- la figure 4 illustre une variante de réalisation de la microlentille principale et de la ferrule conformément à l'invention ;
- la figure 5 illustre une variante du dispositif d'amorçage conforme à l'invention ; et
- la figure 6 illustre schématiquement le montage utilisé pour contrôler la non-déformation du faisceau laser par la microlentille principale du dispositif de la figure 2.

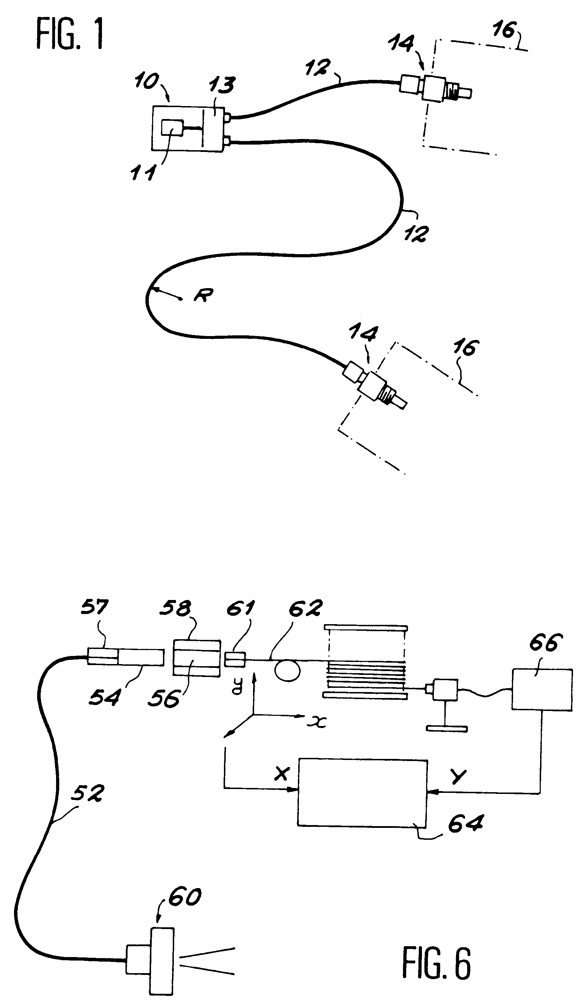

Sur la figure 1, on a représenté schématiquement une chaîne fonctionnelle photopyrotechnique comprenant une centrale laser 10 pourvue essentiellement d'une source laser 11 émettant un faisceau lumineux cohérent dans le proche infrarouge à la longueur d'onde de 1060 nm connecté, via un système de conmutation optique 13, à plusieurs fibres optiques 12 du type à saut d'indice dont le coeur est en silice, transmettant le faisceau laser vers des dispositifs d'amorçage photopyrotechniques miniatures 14 conformes à l'invention. Ceux-ci peuvent être placés sur des supports 16 distincts schématisés en traits mixtes sur la figure 1. Ces supports sont en particulier la paroi de conteneurs ou d'appareils contenant des charges principales qui doivent être initiées par les dispositifs 14. Ces appareils sont en particulier des relais pour une amorce détonateur ou l'inflammateur d'un propulseur.

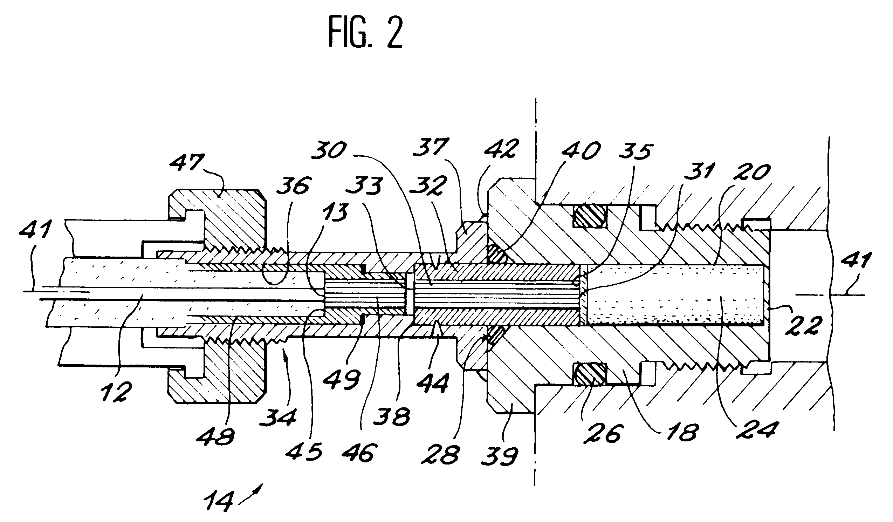

Chaque dispositif miniature 14, comme représenté en coupe sur la figure 2, comporte un corps monobloc 18 en inox de forme générale tubulaire dans lequel est aménagé un évidement 20 cylindrique de diamètre constant. Cet alésage 20 est fermé à son extrémité opposée à la centrale laser par une paroi mince 22 faisant partie intégrante du bloc 18. L'alésage 20 est destiné à recevoir une substance pyrotechnique 24 ; cette charge est placée au contact de la paroi mince 22 ; elle est constituée soit d'une charge unique du type inflammateur, soit d'une double charge initiatrice et renforçatrice du type détonateur.

Ce corps 18 est monté par tout moyen connu sur le support 16 et en particulier par vissage. L'étanchéité entre ce support et le corps 18 est assurée par un joint torique 26.

Conformément à l'invention, le corps 18 du dispositif pyrotechnique comporte à son entrée 28 une microlentille principale convergente à gradient d'indice 30 de forme cylindrique, enserrée dans une ferrule 32 en alliage à mémoire de forme par exemple en Cu-Zn-Al. La ferrule 32 et la microlentille 30 présentent une même longueur, les extrémités de la microlentille et de la ferrule affleurant.

Le sertissage de la microlentille par une ferrule à mémoire de forme assure, entre la microlentille et la ferrule une étanchéité et/ou herméticité supérieure à n'importe quel type de joint. En outre, compte tenu de la petitesse du diamètre de la microlentille, la réalisation d'un joint d'étanchéité de cette taille présenterait de sérieux problèmes technologiques. Il n'en est pas de même pour un joint enserrant la ferrule.

L'ensemble microlentille-ferrule est logé dans l'alésage 20 du corps 18, son extrémité 31 opposée à la centrale laser étant placée au contact de la substance pyrotechnique 24. Ainsi, la protection de la substance pyrotechnique contre l'environnement avant la mise à feu et inversement, la protection de l'environnement contre les gaz résultant de la mise à feu sont assurées. Cette extrémité 31 est généralement recouverte d'une couche métallique 35 de préférence monocouche constituée par de l'aluminium déposé en phase vapeur. Cette couche a une épaisseur de l'ordre de 100 nm. Cette couche métallique permet de diminuer le seuil d'initiation de la charge pyrotechnique 24 d'un facteur 100. Bien entendu, d'autres matériaux (par exemple organiques) pourraient être utilisés à la place de l'aluminium. En outre, cette couche 35 n'est pas obligatoire.

La longueur de l'ensemble microlentille-ferrule est telle que l'extrémité 33 de cet ensemble, opposée à l'extrémité 31, fait saillie par rapport à l'entrée 28 du corps 18.

Un connecteur 34 de forme générale tubulaire équipé d'un alésage 36 étagé, est fixé à l'entrée 28 du corps 18. A cet effet, l'extrémité du connecteur 34 opposée à la centrale laser 10 est équipée d'une bride 37 prenant appui sur l'extrémité 28 du corps 18 équipée aussi d'une bride 39. Une soudure laser annulaire 42 rend solidaire le connecteur 34 et le corps 18 via les brides 37 et 39. L'alésage 36 du connecteur 34, à son extrémité opposée à la centrale laser, comporte un épaulement 38 s'appuyant sur l'extrémité 33 de l'ensemble microlentille-ferrule et assurant le blocage de cet ensemble dans le corps 18.

L'étanchéité et/ou herméticité entre le connecteur 34 et le corps 18 ainsi qu'entre la ferrule et le corps 18 sont assurées par un joint torique 40 situé au niveau des brides 37 et 39 ainsi que par la soudure laser 42 assurant en outre la fixation du connecteur 34 sur le corps 18. De plus, une soudure laser annulaire 44 située à proximité de l'épaulement 38 de l'alésage 36 du connecteur complète le blocage de l'ensemble microlentille-ferrule tout en contribuant à l'étanchéité entre la ferrule et le corps 18.

L'entrée du connecteur 34, située du côté de la centrale laser est destinée à recevoir la fibre optique 12 véhiculant le faisceau laser émis par la source 11.

Le faisceau laser issu de la centrale laser 10 est généralement divergent. Aussi pour améliorer la focalisation de ce faisceau dans la substance pyrotechnique 24, on monte une microlentille auxiliaire convergente 46 en amont de la microlentille principale 30. Cette microlentille 46 est une microlentille à gradient d'indice de forme cylindrique à base circulaire. Elle est montée dans un porte-lentille 48 de forme tubulaire à alésage étagé, montée dans le connecteur 34. Un épaulement 49 de l'alésage 36 du connecteur assure le positionnement du porte-lentille 48.

La fixation de la microlentille 46 dans le porte-lentille 48 est assurée par une couche de colle recouvrant toute la périphérie de la microlentille 46. De même, le porte-lentille 48 est fixé par collage dans le connecteur 34, un film de colle recouvrant toutes les parties en regard du porte-lentille et du connecteur.

Afin de limiter l'encombrement du dispositif d'amorçage 14, l'extrémité du porte-lentille 48 opposée à la source laser vient par montage mécanique se situer au contact de l'extrémité de la ferrule 32 située du côté de la source laser.

La fixation de la fibre optique 12 dans le connecteur 34 est assurée par collage de l'extrémité 13 de la fibre opposée à la source laser sur l'extrémité 45 de la microlentille 46, située du côté de la source laser, à l'aide d'une colle ; un écrou 47 vissé sur une extrémité filetée du connecteur 34 peut compléter la fixation de la fibre 12 dans ce dernier.

L'ensemble connecteur-corps 34-18 ci-dessus équipé respectivement des microlentilles 46 et 30 montées dans le porte-lentille 48 et la ferrule 32 est selon l'invention prévu indémontable.

Afin d'assurer une bonne transmission du faisceau lumineux sortant de la fibre optique jusqu'à la substance pyrotechnique, c'est-à-dire avec le moins de perte possible, l'axe optique du système fibre optique-microlentilles est confondu avec l'axe de révolution 41 du dispositif photopyrotechnique 14. En effet, le connecteur 36, le corps 18, les microlentilles 30, 46, la ferrule 32 et le porte-lentille 48 sont montés coaxialement.

Conformément à l'invention, le dispositif photopyrotechnique 14 comporte une étanchéité et/ou herméticité définies respectivement par un débit de fuite inférieur à $10^{-5}$ et $10^{-6}$ cm³ d'hélium par seconde pour une différence de pression amont-aval de $10^5$ Pa pendant 2 minutes, du fait que conformément à l'invention, le diamètre externe D de la microlentille principale est, à température ambiante, légèrement supérieur au diamètre interne d de l'alésage de la ferrule 32 dans lequel est logé la microlentille. Pour assurer un sertissage satisfaisant, sans toutefois provoquer des défauts dans la microlentille 30, le rapport D/d est choisi dans l'intervalle allant de 1,005 à 1,020, à température ambiante.

Conformément à l'invention, la microlentille auxiliaire 46 transforme le faisceau lumineux sortant de l'extrémité 13 de la fibre optique 12 en un faisceau de lumière parallèle qui est ensuite focalisé par la microlentille 30 dans la substance pyrotechnique 24. Lors d'un tir laser, la charge 24 est mise à feu, et elle est le siège d'une onde de choc qui se propage à travers la charge 24 entraînant la destruction de la paroi mince 22 du corps 18 et par la suite la mise à feu ou détonation de la charge principale contenue à l'intérieur du support 16.

Conformément à l'invention, le dispositif représenté sur la figure 2 est un dispositif miniature. A titre d'exemple il a été réalisé un dispositif photopyrotechnique comportant un corps 18 de 12 mm de diamètre externe en aval de la bride 39, de 4,2 mm de diamètre interne et de 19,4 mm de long. Le connecteur 34 présente un diamètre externe maximal de 6,4 mm et un diamètre interne minimal de 2,9 mm au niveau de la microlentille 46. La ferrule 32 présente, à température ambiante, un diamètre externe de 3,8 mm, un diamètre interne de 1,98 mm et une longueur de 11,5 mm. La microlentille 30 présente un diamètre de 2 mm ± $5 \times 10^{-6}$m et une longueur de 11,5 mm. La microlentille 46 présente un diamètre de 2 mm et une longueur de 28 mm.

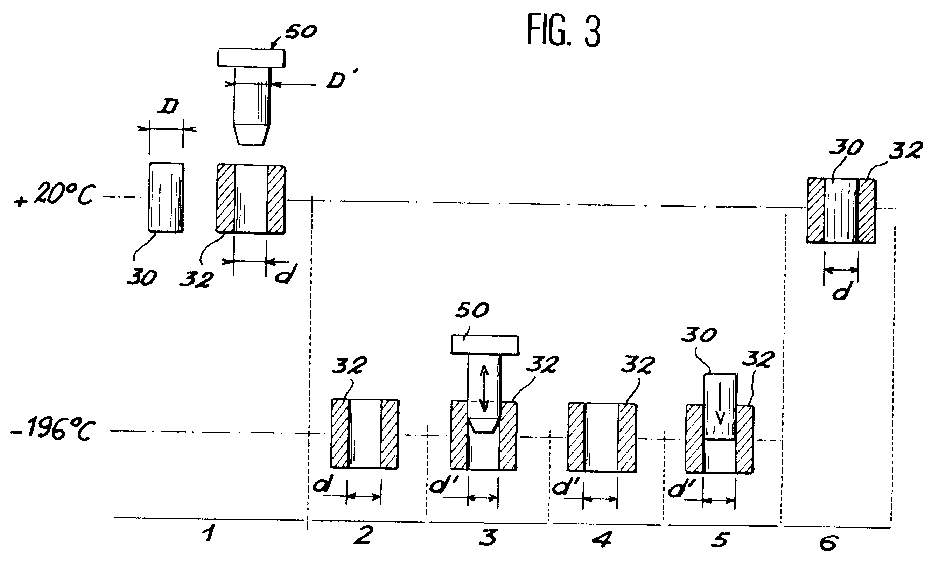

En référence à la figure 3, on décrit ci-après le montage de la microlentille cylindrique 30 à l'intérieur de la ferrule 32 en alliage à mémoire de forme.

L'étape initiale est notée 1. A température ambiante (20°C environ), la ferrule 32 en alliage à mémoire de forme occupe un état de mémoire (phase mère) dans lequel son diamètre intérieur présente la valeur d qui est inférieure au diamètre D de la microlentille. La phase 2 consiste à plonger la ferrule 32 dans de l'azote liquide (-196°C) de façon à ce que le matériau passe sous forme cristalline martensitique. A l'aide d'une pige cylindrique 50 ou une bille dont le diamètre D' est supérieur à celui de la microlentille, on expanse la ferrule 32 de façon que son diamètre interne passe à la valeur d' supérieure au diamètre D de la microlentille. Cette expansion est effectuée à basse température, en maintenant la ferrule 32 dans l'azote liquide et non à haute température comme dans le cas de gaines plastiques thermorétractables. Cette étape constitue la phase 3 du procédé de montage.

La phase 4 de ce procédé consiste à retirer la pige 50 (ou bille) de la ferrule 32 toujours maintenue à la température de l'azote liquide. On introduit alors la microlentille 30 à l'intérieur de la ferrule 32 toujours maintenue à basse température et cette étape constitue la phase 5 du procédé. L'ensemble ferrule-microlentille est alors réchauffé jusqu'à la température ambiante. Le matériau constituant la ferrule 32 reprend alors sa forme initiale ; en particulier le diamètre interne de la ferrule reprend sa valeur d ce qui assure ainsi le sertissage de la microlentille.

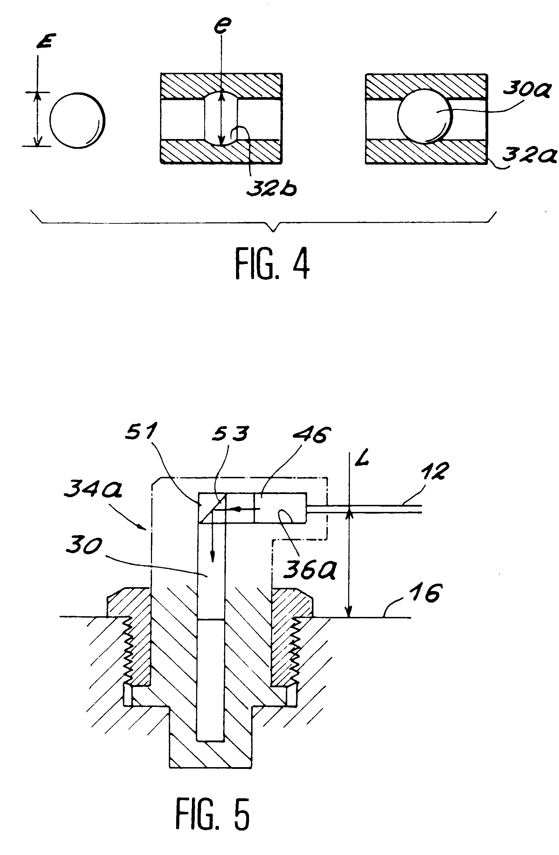

A la place d'une microlentille principale 30 à gradient d'indice de forme cylindrique, on peut utiliser, comme schématisé sur la figure 4, une microlentille 30a de forme sphérique. Dans ce cas, le diamètre interne de la ferrule 32a en matériau à mémoire de forme n'est plus constant et présente une partie élargie 32b, épousant la forme de la microlentille sphérique et ayant, à température ambiante, un diamètre interne e inférieur au diamètre E de la microlentille sphérique.

Le dispositif d'amorçage décrit en référence à la figure 2, comporte un connecteur optique d'entrée 34 droit. Dans une chaîne photopyrotechnique multivoie (figure 1), il peut être préférable d'utiliser un connecteur coudé 34a, comme représenté sur la figure 5, en vue de réduire l'encombrement longitudinal de la channe photopyrotechnique. Cet encombrement est essentiellement dû au rayon de courbure R (figure 1) de la fibre optique qui est $\geqq 80$ mm. Avec un connecteur coudé à angle droit, il est possible de ramener la distance L séparant le support 16 du dispositif d'amorçage de la fibre optique 12, lorsqu'elle est parallèle à la surface du support, de 8 mm à 120 mm, toute chose égale par ailleurs.

Dans ce mode de réalisation, le coude 51 de l'alésage 36a du connecteur optique comporte un prisme 53 à angle droit fonctionnant en réflexion totale pour diriger le faisceau lumineux issu de la microlentille auxiliaire 46 vers la microlentille principale 30.

Des études ont permis de montrer qu'il existait une corrélation très étroite entre les paramètres suivants : diamètre intérieur de la ferrule, diamètre extérieur de la ferrule, rugosité de la paroi interne de la ferrule, diamètre de la microlentille principale qui est un paramètre imposé et mode d'expansion du diamètre interne de la ferrule. En effet, il est important de déterminer cette corrélation afin d'assurer le niveau d'étanchéité et/ou d'herméticité imposé sans détériorer mécaniquement la microlentille principale.

Des essais de mise au point ont permis de déterminer pour une microlentille principale donnée les valeurs optimum des paramètres ci-dessus.

Le tableau I annexé donne quelques résultats d'essais.

Dans ce tableau, X correspond aux essais réalisés. En outre, l'expansion de la ferrule en matériau à mémoire de forme a été réalisée comme décrite précédemment à -196°C, la pige ou la bille ayant servi à l'expansion présentant un diamètre externe de 2,02 mm.

Les essais A, B, C, D du tableau I n'ont pas donné de résultats de sertissage satisfaisant étant donné que la microlentille était soumise à des forces de serrage trop importantes entraînant des fêlures internes de la microlentille. En revanche, les essais E et F ont permis d'obtenir un serrage de bonne qualité (tenue en pression à $10^8Pa$ d'huile) avec peu d'influence de la rugosité sur les résultats d'étanchéité et d'herméticité caractérisées respectivement par un débit de fuite de $10^{-6}$ et $10^{-5}cm^3$ d'hélium par seconde.

Des résultats identiques aux essais E et F ont été obtenus avec une microlentille de 1,8 mm de diamètre, une ferrule de 1,78 mm de diamètre interne et de 2,5 mm de diamètre externe.

Ces essais ont été réalisés avec des microlentilles en verre traité et des ferrules en Cu-Zn-Al avec le pourcentage en poids respectivement de 68, 28 et 4%. Ce matériau à mémoire de forme était utilisé en simple effet, sans possibilité de démontage pour répondre aux exigences du dispositif. La pige 50 et la bille étaient en acier inoxydable, matériau conservant ses caractéristiques dimensionnelles lorsque l'on passe de la température ambiante à la température de l'azote liquide.

Le dispositif photopyrotechnique conforme à l'invention doit présenter une étanchéité et/ou une herméticité, après montage de l'ensemble ferrule-microlentille principale tout à fait satisfaisantes, une non-déformation et non-atténuation du faisceau laser lors de son passage au travers de la microlentille principale, après sertissage de celle-ci, et une conservation des caractéristiques optiques et mécaniques dans une gamme de température allant de -110 à +100°C et ce, dans le temps (jusqu'à 10 ans).

Aussi, afin de vérifier les résultats visés par l'invention, les inventeurs ont effectué un certain nombre d'essais de validation que l'on présente ci-après.

### a) Mesure d'étanchéité et/ou d'herméticité

Des essais de mesure de débit de fuite effectués sur un spectromètre de masse ont donné les résultats escomptés dans plusieurs configurations. En particulier, il a été obtenu un débit de fuite inférieur à $10^{-7}cm^3$ d'hélium par seconde dans le cas du sertissage E (voir tableau) pour une rugosité interne de la ferrule de $0,8x10^{-6}m$.

### b) Mesure de non-déformation du faisceau laser

Cette mesure a été effectuée avec le dispositif schématisé sur la figure 6.

L'image de la face de sortie d'une fibre optique 52 de 600 micromètres de diamètre de coeur est réalisée au grandissement 1 à l'aide de deux microlentilles de verre identiques 54 et 56 à gradient d'indice. L'indice au centre $n_o$ de ces microlentilles est de 1,6 et décroît vers la périphérie suivant la loi $n_r=n_o (1-Ar^2/2)$ où $\sqrt{A}$ est le gradient quadratique constant de la microlentille et r le rayon de la microlentille.

Conformément à l'invention, la microlentille 56 jouant le rôle de microlentille principale a été montée dans une ferrule en Cu-Al-Zn comme décrit en référence à la figure 3. La microlentille 54 joue le rôle de la microlentille auxiliaire.

La lumière émise par une diode électroluminescente 60 est couplée à la fibre optique 52 par une embase.

La première microlentille 54 est fixée par collage à l'extrémité de la fibre optique 52 ; cet ensemble est maintenu dans un module à déplacement micrométrique 57 de façon à pouvoir être aligné avec la microlentille 56 à contrôler, maintenue fixe.

Un deuxième module de déplacement micrométrique 61 permet de déplacer une fibre optique 62 plus fine que la fibre optique 52 (85 micromètres de diamètre de coeur) pour mesurer le diamètre de la tache lumineuse en sortie de la microlentille 58. La distance entre la fibre de mesure 62 et la microlentille 56 à contrôler est de l'ordre de 20 micromètres et celle séparant les deux microlentilles 54 et 56 est de 0,1 mm environ.

Une table traçante 64 permet de visualisr le profil de la lumière reçue par la fibre 62 en fonction de son déplacement en X et en Y. Cette table traçante 64 est reliée à un photomètre 66 transformant le signal lumineux reçu par la fibre 62 en un signal électrique.

Les résultats obtenus sont résumés dans le tableau II ci-après, en fonction du diamètre intérieur de la ferrule, avant son expansion à basse température.

7

Le tableau II de résultats de mesure montre que la mise en oeuvre du processus de sertissage conforme à l'invention de la microlentille principale a peu d'influence sur le trajet optique du faisceau lumineux.

c) Mesure d'atténuation du faisceau laser

Pour ces mesures, le montage est identique à celui représenté sur la figure 6, à la nuance près que la cellule du photomètre 66 est mise en lieu et place de la fibre optique de mesure 62, en sortie de la microlentille 56.

Pour chaque mesure, l'atténuation est exprimée en décibels et en pourcentage, en prenant comme référence la valeur de la puissance lumineuse en sortie de la microlentille 54.

Les résultats obtenus sont présentés dans le tableau III en fonction du diamètre intérieur de La ferrule, avant expansion à basse température.

Ce tableau III de résultats de mesure montre que la mise en oeuvre du processus de sertissage de la microlenti lle principale conforme à l'invention a peu d'influence sur l'atténuation du faisceau lumineux.

d) Tenue en ambiance climatique

Différents dispositifs photopyrotechniques conformes à l'invention ont subi deux types d'épreuves climatiques : premièrement des cycles de températures (chaleur sèche) consistant en 4 cycles de 6 heures comprenant chacun un palier à -10°C et un autre à +40°C avec une vitesse de variation de 2°C par minute entre ces paliers ; deuxièmement, des chocs thermiques consistant à stabiliser l'ensemble pendant 15 minutes à 20°C puis à le chauffer à 100°C en une minute et ceci 5 fois.

Les caractéristiques effectuées avant et après passage dans ces épreuves climatiques n'ont montré aucune dégradation des résultats donnés dans les tableaux II et III.

Tableau I

ESSAIS DE SERTISSAGE

Paramètre constant : Diamètre de la microlentille :

$$2 \text{ mm} \pm 5.10^{-6}\text{m}$$

| Diamètre intérieur ferrule T. ambiante (mm) | Diamètre extérieur ferrule (mm) | Rugosité ferrule $10^{-6}$ m | | Expansion | | Observations |
|---|---|---|---|---|---|---|
| | | 1,6 | 0,8 | Pige | Bille | |
| 1,96 | 3,4 | X | | X | | A |
| | 3,6 | X | | X | | B |
| | 3,8 | X | | X | | C |
| 1,97 | 3,4 | | X | X | X | D |
| | 3,8 | X | X | X | X | E |
| 1,98 | 3,8 | X | | X | | F |

X : essais réalisés

EP 0 397 572 B1

## Tableau II

EP 0 397 572 B1

| Diamètre intérieur ferrule avant expansion (mm) | Diamètre image de la fibre optique ($10^{-6}$ m) à travers la microlentille | |
|---|---|---|
| | avant sertissage | après sertissage |
| 1,98 | de 565 à 570 | 581 |
| 1,97 | 565 | 571 |
| 1,96 | de 565 à 570 | de 570 à 574 |

Tableau III

| Diamètre intérieur ferrule avant expansion (mm) | ATTENUATION due à la microlentille | | | |
| --- | --- | --- | --- | --- |
| | avant sertissage | | après sertissage | |
| | db | % | db | % |
| 1,98 | 0,19 | - 4,3 | 0,14 | - 3,2 |
| 1,97 | 0,20 | - 4,5 | 0,25 | - 5,6 |
| 1,96 | 0,20 | - 4,5 | 0,19 | - 4,3 |

## Revendications

1. Dispositif d'amorçage photopyrotechnique miniature (14) comportant un corps creux (18) fermé à une extrémité (22) et destiné à recevoir une substance pyrotechnique (24), une optique rigide de focalisation logée dans le corps servant à focaliser un faisceau lumineux énergétique de longueur d'onde donnée sur la substance pyrotechnique, caractérisé en ce que l'optique de focalisation est une microlentille (30) à gradient d'indice ou une microlentille sphérique ayant un indice constant dans tout le volume, insérée dans une ferrule (32) en un métal ou alliage métallique à mémoire de forme, montée (36, 38, 40, 44) à l'entrée (28) du corps creux (18) et assurant une fixation étanche et hermétique de la microlentille à l'intérieur du corps.

2. Dispositif selon la revendication 1, caractérisé en ce que la microlentille est cylindrique ou sphérique et a un diamètre inférieur à 3mm.

3. Dispositif selon l'une quelconque des revendications 1 ou 2, caractérisé en ce que la ferrule (32) en matériau à mémoire de forme présente un diamètre interne, à température ambiante, inférieur au diamètre de la microlentille.

**4.** Dispositif selon l'une quelconque des revendications 1 à 3, caractérisé en ce que le matériau à mémoire de forme est un matériau à simple mémoire.

**5.** Dispositif selon la revendication 4, caractérisé en ce que le rapport du diamètre D de la microlentille sur le diamètre interne d de la ferrule, à température ambiante, est tel que $1,005 \leqq D/d < 1,020$.

**6.** Dispositif selon l'une quelconque des revendications 1 à 5, caractérisé en ce que la ferrule présente une épaisseur de 0,9mm environ, à température ambiante.

**7.** Dispositif selon l'une quelconque des revendications 1 à 6, caractérisé en ce que le corps (18) est monobloc.

**8.** Dispositif selon l'une quelconque des revendications 1 à 7, caractérisé en ce que des moyens d'étanchéité (40) sont prévus entre le corps et la ferrule.

**9.** Dispositif selon l'une quelconque des revendications 1 à 8, caractérisé en ce qu'il comprend une microlentille auxiliaire montée en amont de la microlentille (30) insérée dans la ferrule (32) pour rendre parallèle le faisceau lumineux.

**10.** Dispositif selon l'une quelconque des revendications précédentes, caractérisé en ce qu'un connecteur optique (34, 34a) est monté à l'entrée du corps assurant en partie le maintien de la ferrule dans ce dernier et l'amenée du faisceau lumineux.

**11.** Dispositif selon la revendication 10, caractérisé en ce que le connecteur est coudé et comporte un moyen (53) pour diriger le faisceau lumineux sur la microlentille (30) insérée dans la ferrule (32).

**12.** Dispositif selon la revendication 10 ou 11, caractérisé en ce que des moyens d'étanchéité (40) sont prévus entre le connecteur et le corps.

**13.** Chaîne fonctionnelle pyrotechnique comprenant une source laser (10) pour émettre un faisceau laser de longueur d'onde donnée, au moins un dispositif d'amorçage photopyrotechnique (14) selon l'une quelconque des revendications précédentes et un câble optique (12) pour transporter le faiceau laser émis par la source jusqu'au dispositif d'amorçage.

**14.** Procédé de montage d'une microlentille rigide (30) à gradient d'indice ou d'une microlentille sphérique rigide ayant un indice constant dans tout le volume, dans une ferrule (32) en métal ou alliage métallique à mémoire de forme, devant être montée dans un dispositif d'amorçage photopyrotechnique selon l'une quelconque des revendications 1 à 12, consistant à utiliser une ferrule métallique (32) présentant à une première température, une première phase cristallographique, le diamètre interne (d) de la ferrule à cette première température étant inférieur au diamètre (D) de lamicrolentille ; à abaisser la température de la ferrule jusqu'à une seconde température à laquelle le métal ou l'alliage présente une seconde phase cristallographique ; à introduire dans la ferrule maintenue à cette seconde température une pige cylindrique (50) ou bille ayant un diamètre (D') supérieur au diamètre (D) de la microlentille ; à enlever la pige ou bille de la ferrule (32) maintenue à la seconde température ; à introduire la microlentille (30) dans la ferrule (32) maintenue à la seconde température et à réchauffer l'ensemble ferrule-microlentille jusqu'à la première température.

**Patentansprüche**

**1.** Photopyrotechnische Miniatur-Zündungsvorrichtung (14), die einen hohlen Körper (18), der an einem Ende (22) geschlossen ist und zum Aufnehmen einer pyrotechnischen Substanz (24) bestimmt ist, und eine starre Fokussierungsoptik umfaßt, die in dem Körper untergebracht ist und dazu dient, ein energetisches Lichtbündel gegebener Wellenlänge auf die pyrotechnische Substanz zu fokussieren, dadurch gekennzeichnet, daß die Fokussierungsoptik eine Mikrolinse (30) mit einem Gradientenindex oder eine sphärische Mikrolinse mit einem konstanten Index in dem gesamten Volumen ist, die in eine Hülse (32) aus einem Metall oder einer Metallegierung mit Formerinnerungsvermögen eingeführt ist, die am Eingang (28) des Hohlkörpers (18) angebracht (36, 38, 40, 44) ist und eine dichte und abdichtende Befestigung der Mikrolinse im Inneren des Körpers sicherstellt.

2. Vorrichtung nach Anspruch 1, dadurch gekennzeichnet, daß die Mikrolinse zylindrisch oder sphärisch ist und einen Durchmesser kleiner als 3 Millimeter aufweist.

3. Vorrichtung nach einem beliebigen der Ansprüche 1 oder 2, dadurch gekennzeichnet, daß die Hülse (32) aus einem Werkstoff mit Formerinnerungsvermögen einen bei Umgebungstemperatur kleineren Innendurchmesser als der Durchmesser der Mikrolinse aufweist.

4. Vorrichtung nach einem beliebigen der Ansprüche 1 bis 3, dadurch gekennzeichnet, daß der Werkstoff mit Formerinnerungsvermögen ein Werkstoff mit einem einfachen Erinnerungsvermögen ist.

5. Vorrichtung nach Anspruch 4, dadurch gekennzeichnet, daß das Verhältnis des Durchmesser D der Mikrolinse zu dem Innendurchmesser d der Hülse bei Umgebungstemperatur wie $1,005 \leqq D/d < 1,020$ ist.

6. Vorrichtung nach einem beliebigen der Ansprüche 1 bis 5, dadurch gekennzeichnet, daß die Hülse eine Dicke von ungefähr 0,9 mm bei Umgebungstemperatur aufweist.

7. Vorrichtung nach einem beliebigen der Ansprüche 1 bis 6, dadurch gekennzeichnet, daß der Körper (18) eine Blockkonstruktion ist.

8. Vorrichtung nach einem beliebigen der Ansprüche 1 bis 7, dadurch gekennzeichnet, daß Abdichtungsmittel (40) zwischen dem Körper und der Hülse vorgesehen sind.

9. Vorrichtung nach einem beliebigen der Ansprüche 1 bis 8, dadurch gekennzeichnet, daß sie eine zusätzliche Mikrolinse umfaßt, die stromaufwärts der in die Hülse (32) eingeführten Mikrolinse (30) angebracht ist, um das Lichtbündel parallel zu machen.

10. Vorrichtung nach einem beliebigen der vorhergehenden Ansprüche, dadurch gekennzeichnet, daß eine optische Verbindungseinrichtung (34, 34a) am Eingang des Körpers angebracht ist, die teilweise das Halten der Hülse in diesem letzteren und das Heranführen des Lichtbündels sicherstellt.

11. Vorrichtung nach Anspruch 10, dadurch gekennzeichnet, daß die Verbindungseinrichtung abgewinkelt ist und ein Mittel (53) umfaßt, um das Lichtbündel auf die in die Hülse (32) eingeführte Mikrolinse (30) zu lenken.

12. Vorrichtung nach Anspruch 10 oder 11, dadurch gekennzeichnet, daß Abdichtungsmittel (40) zwischen der Verbindungseinrichtung und dem Körper vorgesehen sind.

13. Pyrotechnische Funktionskette, die eine Laserquelle (10), um ein Laserbündel gegebener Wellenlänge auszusenden, wenigstens eine photopyrotechnische Zündungsvorrichtung (14) gemäß einem beliebigen der vorhergehenden Ansprüche und ein optisches Kabel (12) umfaßt, um das von der Quelle ausgesandte Laserbündel bis zu der Zündungsvorrichtung fortzupflanzen.

14. Verfahren zum Befestigen einer starren Mikrolinse (30) mit Gradientenindex oder einer starren, sphärischen Mikrolinse mit konstantem Index in dem gesamten Volumen in einer Hülse (32) aus Metall oder einer Metallegierung mit Formerinnerungsvermögen, die in einer photopyrotechnischen Zündvorrichtung gemäß irgendeinem der Ansprüche 1 bis 12 angebracht werden soll, das darin besteht, eine metallische Hülse (32) zu verwenden, die bei einer ersten Temperatur eine erste kristallographische Phase aufweist, wobei der Innendurchmesser (d) der Hülse bei dieser ersten Temperatur kleiner als der Durchmesser (D) der Mikrolinse ist; die Temperatur der Hülse bis zu einer zweiten Temperatur abzusenken, bei der das Metall oder die Legierung eine zweite kristallographische Phase aufweist; in die bei dieser zweiten Temperatur aufrechterhaltene Hülse einen zylindrischen Maßstab (50) oder eine Kugel mit einem größeren Durchmesser (D') als der Durchmesser (D) der Mikrolinse einzuführen; den Maßstab oder die Kugel aus der bei der zweiten Temperatur gehaltenen Hülse (32) zu entfernen; die Mikrolinse (30) in die bei der zweiten Temperatur gehaltene Hülse (32) einzuführen und die Hülse-Mikrolinse-Gesamtheit bis auf die erste Temperatur wiederzuerwärmen.

## Claims

1. Miniature pyrotechnic priming device (14) having a hollow body (18) sealed at one end (22) and serving to receive a pyrotechnic substance (24), a rigid focusing optics located in the body used for focusing a high energy light beam of given wavelength onto the pyrotechnic substance, characterized in that the focusing optic is an index gradient microlens (30) or a spherical microlens having a constant index throughout the volume, inserted in a shape memory metal or metal alloy ferrule (32), fitted (36, 38, 40, 44) at the entrance (28) of the hollow body (18) and ensuring a tight, hermetic fixing of the microlens within the body.

2. Device according to claim 1, characterized in that the microlens is cylindrical or spherical and has a diameter smaller than 3 mm.

3. Device according to claim 1, characterized in that the memory material ferrule (32) has an internal diameter, at ambient temperature, smaller than the microlens diameter.

4. Device according to any one of the claims 1 to 3, characterized in that the shape memory material is a non-reversing memory material.

5. Device according to claim 4, characterized in that the ratio of the microlens diameter D to the internal diameter d of the ferrule, at ambient temperature, is $1.005 \leqq D/d < 1,020$.

6. Device according to any one of the claims 1 to 5, characterized in that the ferrule thickness is approximately 0.9 mm, at ambient temperature.

7. Device according to any one of the claims 1 to 6, characterized in that the body (18) is in one piece.

8. Device according to any one of the claims 1 to 7, characterized in that sealing means (40) are provided between the body and the ferrule.

9. Device according to any one of the claims 1 to 8, characterized in that it comprises an auxiliary microlens fitted upstream of the microlens (30) and inserted in ferrule (32) to make the light beam parallel.

10. Device according to any one of the preceding claims, characterized in that an optical connector (34, 34a) is installed at the entrance of the body, partly ensuring the maintaining in place of the ferrule in the latter and the supply of the light beam.

11. Device according to any one of the preceding claims, characterized in that the connector is bent and has a means (53) for directing the light beam onto the microlens (30) inserted in ferrule (32).

12. Device according to claim 10 or 11, characterized in that sealing means (40) are provided between the connector and the body.

13. Pyrotechnic functional chain incorporating a laser source (10) for emitting a laser beam of a given wavelength, at least one photopyrotechnic priming device (14) according to claim 1 and an optical cable (12) for carrying the laser beam emitted by the source to the priming device.

14. Process for fitting a rigid index gradient microlens (30) or rigid spherical microlens having a constant index throughout the volume, in a shape memory metal or metal alloy ferrule (32) for fitting in a pyrotechnic priming device according to any one of the claims 1 to 12 consisting of using a metal ferrule (32) having a first temperature, a first crystallographic phase, the internal diameter (d) of the ferrule at said first temperature being below the diameter (D) of the microlens, lowering the temperature of the ferrule to a second temperature at which the metal or alloy has a second crystallographic phase, introducing into the ferrule maintained at said second temperature a cylindrical rod (50) or ball having a diameter (D') exceeding the diameter (D) of the microlens, removing the rod or ball from the ferrule (32) maintained at said second temperature, introducing the microlens (30) into the ferrule (32) maintained at the second temperature and reheating the ferrule - microlens assembly to the first temperature.

FIG. 1

FIG. 6

FIG. 2

FIG. 3

EP 0 397 572 B1

FIG. 4

FIG. 5